# EUROPEAN PATENT SPECIFICATION

(11) **EP 1 168 141 B1**
(45) Date of publication and mention of the grant of the patent: **29.08.2007**
(21) Application number: 01305484.6
(22) Date of filing: 25.06.2001
(51) Int. Cl.: G06F 1/00

(54) **A secure and open computer platform**
Eine gesicherte und offene Rechnerplattform
Une plate-forme d'ordinateur sécurisée et ouverte

(30) Priority: 23.06.2000 US 213495 P
(43) Date of publication of application: 02.01.2002
(73) Proprietor: Franklin Electronic Publishers, Incorporated, Burlington, NJ 08016 (US)
(72) Inventor: Yianilos, Peter, Princeton, New Jersey 08540 (US); Kilian, Joseph, Princeton Junction, NJ 08550 (US)
(74) Representative: Hale, Peter

(56) References cited:
- WO-A-00/10283
- WO-A-98/45768

## Description

This invention relates to an apparatus and system for providing a computer platform, in particular, one that controls the operation of the application programs and object files to adequately protect against computer malfunctions.

In creating a computer platform, one concern is the amount of control that the platform retains over how application programs operate and data files are accessed on the platform. A computer platform can have control features that implement rules and restrictions on how application programs run and data files are accessed on that platform. Each application program operating on this platform would then usually be written in accordance with these rules or restrictions.

Control features of a platform are intended to effect some type of security to the platform user and/or the application program or object file writer. For example, a computer platform can contain certain control features to prevent undesirable computer malfunctions such as ones caused by a computer virus or a badly written application program. In other instances, a computer platform can also have control features to prevent violations of a person's intellectual property rights that can occur by unauthorized duplication of copyrighted material.

The more control features that are implemented in a given platform, the less flexible the platform is in accommodating application programs. If an application program is written to comply with a particular platform's rules, that application program might only be capable of being used on that platform. Conversely, application programs written to comply with a different platform's rules might not operate on this platform.

An application programmer will usually have to determine which platform the program application is being written for before writing the application program. Consequently, an application programmer will usually favor the platforms that are the least restrictive because it increases the chance of the application program being able to be run on the most platforms. Thus, it is more advantageous for a platform to use the least amount of rules in implementing the desired control features.

If a computer platform is intended to handle sensitive copyrighted material, then prevention of unauthorized copying becomes paramount and other control issues are less important. With the advent and popularity of digital publications and electronic distribution of publications to be read on electronic readers, protection of copyrights on a computer platform has become important.

Consequently, it would be advantageous to provide a computer platform that provides control features to prevent unwanted violations of intellectual property rights and still allows enough flexibility for application programs and object files. It would also be advantageous to provide a computer platform that provides control features that protect against malfunctions of program applications on the platform.

WO-A-00/1023 discloses a method and system for protecting content by ensuring a secure software processing environment. A processor is coupled to a certification unit which ensures that only certified software is permitted access to memory containing content. The certifying a unit also certifies a BIOS and operating system stored in memory in response to a start up request. The BIOS and operating system are only loaded if they are correctly certified.

The current invention involves a system that provides enough control features to create a secure platform and yet maintain the flexibility to be able to operate and run a large variety of applications.

The present invention is defined in the accompanying independent claims 1, 13 and 17. Some preferred features are recited in the dependent claims.

In a preferred embodiment the invented system entails utilizing control features which in combination protect against malfunctions in a computer platform and provides the ability to prevent unauthorized access to copyrighted material. These security measures include:
1) A secure operating system, including a secure memory management system;
2) Public key encryption;
3) Data authentication through digital signatures; and
4) Application program/object file approval.

Providing a secure operating system can entail two aspects: 1) ensuring that the operating system is approved for the platform and 2) creating firewalls around application programs and object files that operate on the platform. The term "firewall" is used herein to refer to the arrangement in the computer platform that employs certain memory management components of the operating system to bar access to an application program or an object file in memory. Access to the object file or application program can be granted only if the required permission is obtained.

Encryption generally entails reformatting data using an "encryption" key such that no one else will be able to utilize or read that data if they do not have an appropriate "decryption" key.

Data authentication entails the ability of verifying the author and title of data to ensure that the data is properly authored and has not been tampered with from the time of creation by that author to the receipt by the platform.

Application/data approval allows application programs to reject the type of object files that it will operate on and also allows the object files to reject the application through a flexible access policy through the use of object handlers and an application program approval process.

In the embodiment of the invented system, these four types of control features are available to be accessed by an application program or data file while on the platform. Application programs and files can operate on the platform without utilizing the control features. Through these four types of control features, a computer platform that is both open to accept various application programs and to protect intellectual property is provided.

The present invention can be put into practice in various ways, some of which will now be described with reference to the accompanying drawings, in which:
Fig. 1 depicts the layout of an apparatus that implements one embodiment of the present invention;
Fig.2 depicts a flow chart demonstrating the creation of a digital signature in accordance with one embodiment of the present invention;
Fig. 3 depicts a flow chart demonstrating the signature authentication process in accordance with one embodiment of the present invention;
Fig. 4 depicts a flow chart demonstrating the creation of a digital signature along with the further step of encryption in accordance with one embodiment of the present invention;
Fig. 5 depicts a flow chart demonstrating the signature authentication process along with the further step of decryption in accordance with one embodiment of the present invention;
Fig. 6 depicts a flow chart demonstrating the creation of a digital signature along with the further step of encryption in accordance with another embodiment of the present invention
Fig. 7 depicts a flow chart demonstrating the signature authorization process along with the further step of decryption in accordance with another embodiment of the present invention; and
Fig. 8 depicts a flow chart demonstrating the steps of obtaining permission to access data in memory in accordance with one embodiment of the present invention.

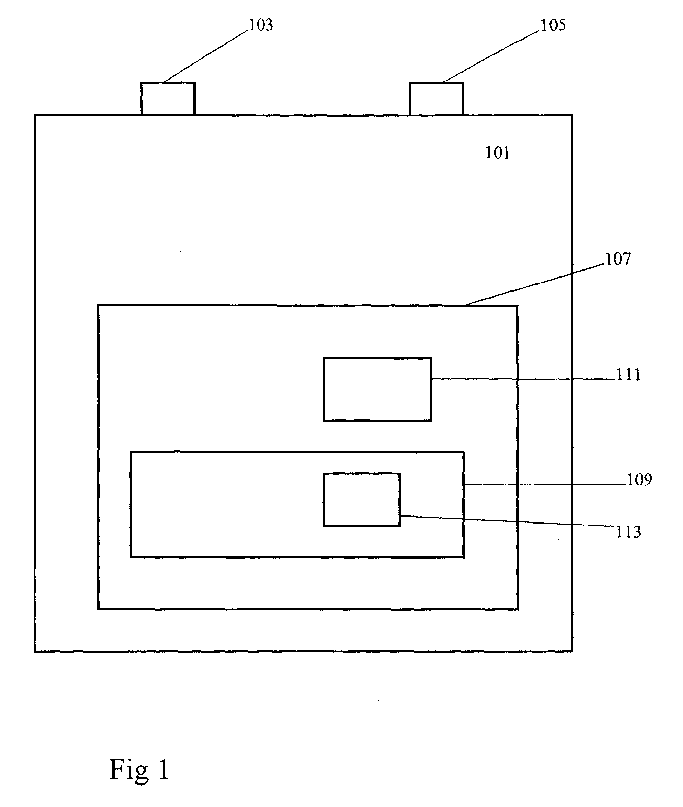

Fig. 1 depicts the layout of a device that implements one embodiment of the present invention. Computer platform 101 is provided with an input interface 103 and an output interface 105 to allow the platform to obtain and transmit data. Input interface 103 and output interface 105 can be the same physical interface so long as it has the capability of both receiving and transmitting data.

Hardware 107 is contained within computer platform 101 and implements firmware 109. Hardware 107 also comprises memory registers 111. The computer platform's operating system will be loaded onto the hardware 107.

The operating system ("O/S") is the foundation for the platform's security and digital rights management infrastructure. Firmware 109 contains an O/S verifier 113 to authenticate the O/S before the O/S is loaded onto the hardware 107. Every time that the O/S is loaded or modified, the O/S verifier 113 must authenticate the O/S. O/S verification prevents potential circumvention of the security features that are implemented by the O/S by unauthorized modification or substitution of the O/S. O/S verification does not impose any restrictions that would affect application programs running on the computer platform.

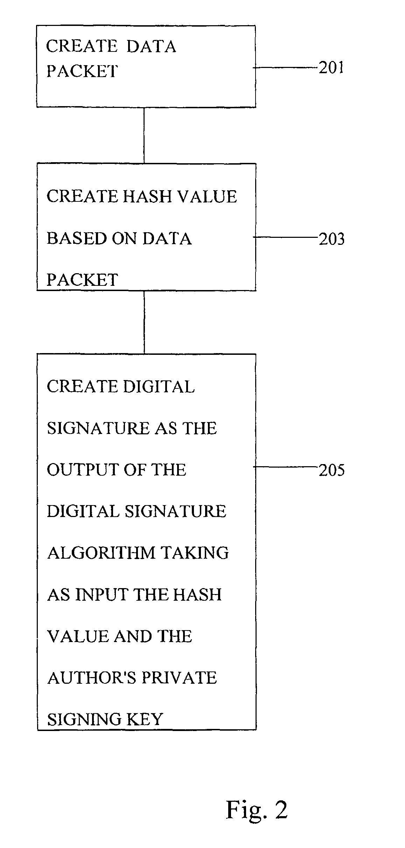

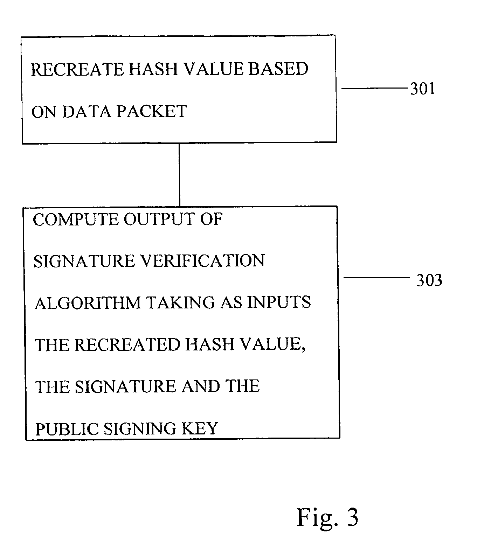

O/S verification can be accomplished by various methods. One method of O/S verification that can be implemented uses digital signatures. Algorithms for creating and verifying signatures, and for generating the public/private signing key pairs, and well known in the literature (c.f. Bruce, Schneier, "Applied Cryptography, second edition", John Wiley & Sons, Inc. New York (1996). Figs. 2 and 3 depict digital signature verification for the O/S. This technique uses public/secret signature keys. The first step 201 of the digital signature process is to create the data packet to be signed. The data packet is not necessarily just the O/S. Other information may be included as part of the data packet. For example, the credentials of the data can be included along with the data packet. These credentials can include various items to identify the O/S, such as, the author, version and date of creation.

After determining the data packet to be signed, the next step 203 is to apply a hash function to the data packet. A hash function essentially creates a value of fixed length called the hash value. The hash value is derived from characteristics of the data packet. Different data packets will usually create different hash values. Furthermore, it is computationally unfeasible to produce two different packets that have the same hash value.

Each author is associated with one or more public/private pairs of signing keys. After the hash value is created (203), the hash value and the private signing key are input to a fixed, publicly known signing algorithm, that produces a digital signature as its output (205). Each private signing key is unique to and known by a single author. The resulting signature is unique to the author who knows the private signing key.

Fig. 3 depicts the steps that are taken to authenticate a signed data packet. The first step (301) is to recalculate the hash value of the data packet. This calculation reapplies the hash function to the data packet. The recalculated hash value, the signature and the public signing key are given as inputs to a fixed, publicly known signature verification algorithm (303). This algorithm outputs one of two values: "accept", meaning that the signature is to be accepted and "reject", meaning that the signature is to be rejected.

The combination of creating a hash code and signing the hash code to create the digital signature allows the ability of ensuring that the signer created the signature and that the data packet has not been altered since the signature was created.

For the O/S verifier, the authorized O/S programmer's public signature key is burned into the hardware of the computer platform. This is necessary since the O/S is usually the first software that is loaded onto the computer platform and the computer platform must be able to verify that O/S when it is loaded. The authorized O/S programmer is usually the manufacturer of the computer platform.

The procedures of creating a digital signature and authenticating the digital signature detailed in Figs. 2 and 3 are not limited to O/S verification. These procedures can also be applicable to the process of authenticating application programs and object files. However, in addition to the procedures in Figs 2 and 3, authenticating application programs and object files can entail additional steps.

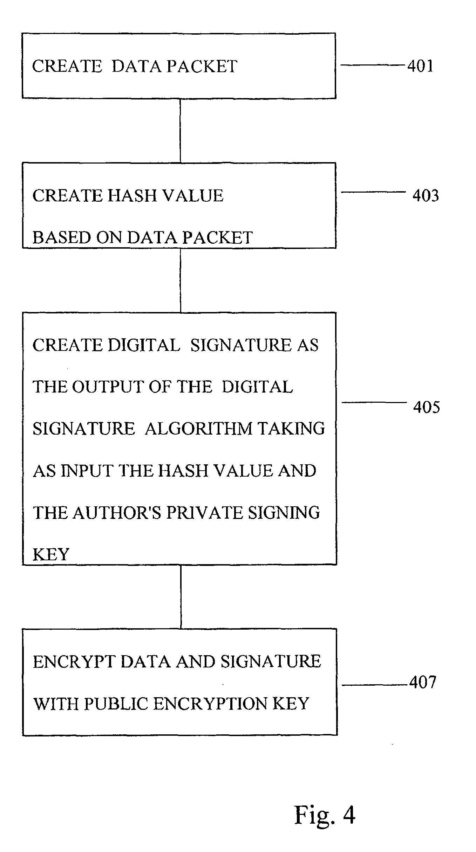

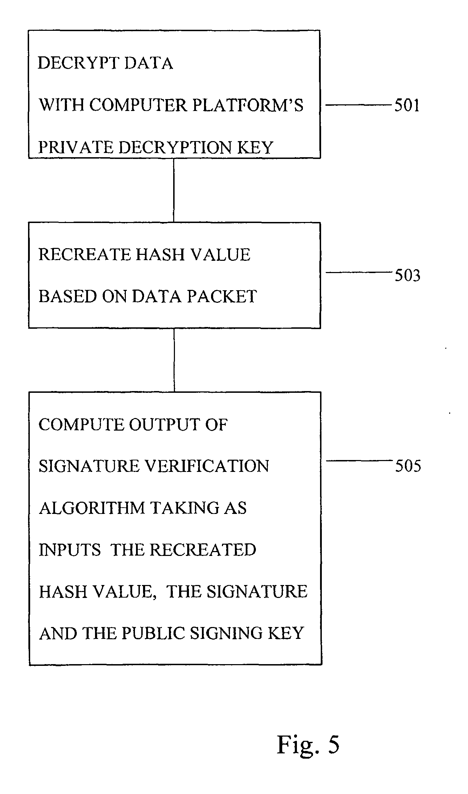

Figs. 4 and 5 depict the procedures that can be implemented when authenticating signatures of application programs and object files. Similar to the procedures outlined in Fig. 2, the first three steps of creating a signature for application programs and object files are the steps of creating the data packet 401, creating the hash value 403 and creating the digital signature 405. For application programs and object files, credentials should be included with the data packet and those credentials should include at least the name of the author of the data. After the signature of the data packet is created, the data packet and the signature are both encrypted with a public encryption key in step 407.

Similar to the public/secret signature keys, the public encryption key is distinctively related to a private decryption key. However, both encryption/decryption keys are unique to a particular computer platform rather than a particular programmer. Another difference is that the public encryption key is used to encrypt the data while the private decryption key is used to decrypt the data. The private decryption key is kept secret and is only known to that particular computer platform. This permits only that computer platform access to the encrypted data that has been encrypted with the public key unique to the platform.

To authenticate the application program or object file, the first step 501 is to decrypt the encrypted data with the computer platform's private decryption key. After the data has been decrypted, the decrypted data should consist of the data packet and the digital signature. The next steps are to recreate the hash value of the data packet 503, and obtain the output from the publicly known signature verification algorithm 505. If the hash values do not match, then the data is erased from memory.

Encryption of the data packet by using the public/private key technique provides rigorous protection against unauthorized access to the encrypted data by using two separate keys. This process, however, can utilize a substantial amount of the platform's processing resources. In addition, by encrypting the entire data packet, the encryption and decryption process can take a substantial amount of time to perform.

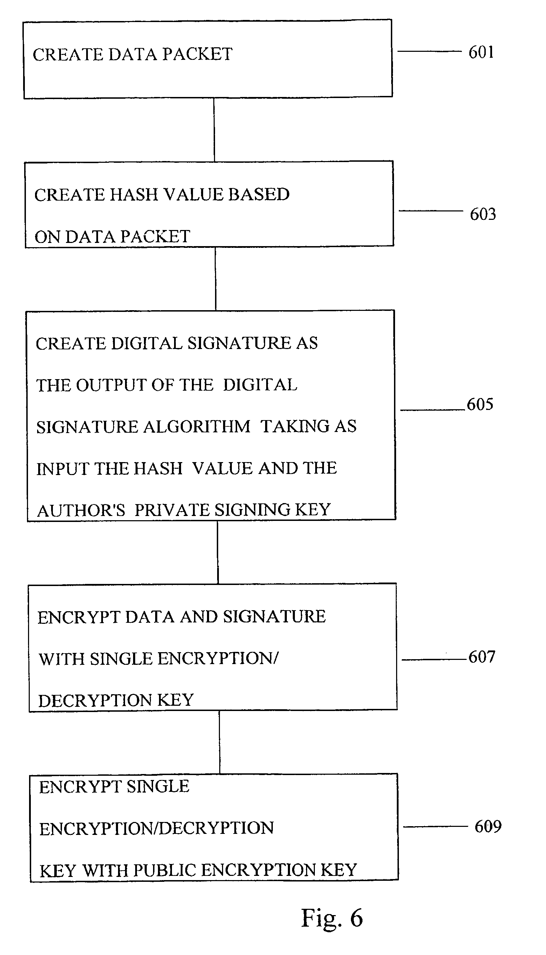

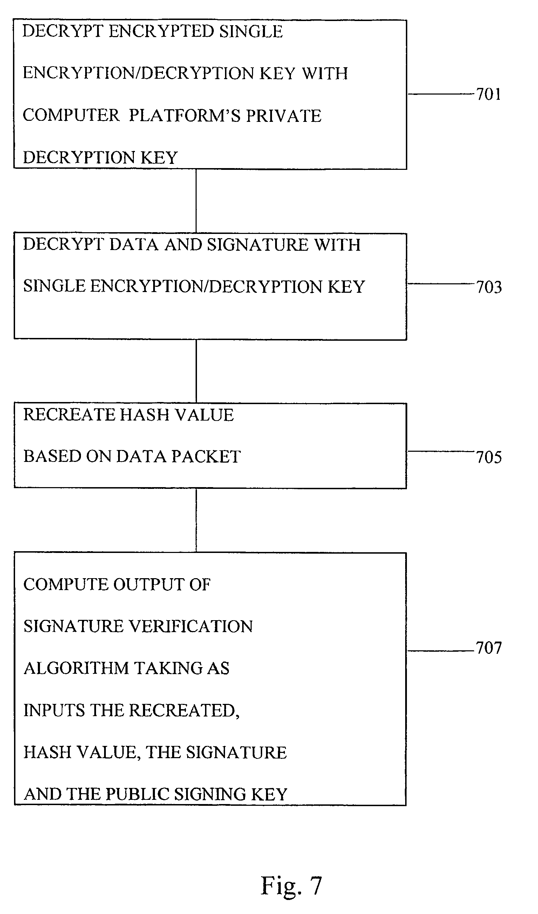

Another alternative to using the public/private keys to encrypt the data packet is to utilize a less complicated encryption technique in addition to the public/private key encryption. Figs. 6 and 7 depict the process of authenticating program applications and object files utilizing the second encryption technique.

The first step 601 is to create the data packet. The second and third steps 603, 605 are to create the hash value and digital signatures of the data packet. The fourth step 607 is to encrypt the data packet and signature with a single encryption/decryption key. This single key is used to both encrypt and decrypt. The single decryption key, itself, is then encrypted in the next step 609 with the public encryption key that pertains to the particular platform.

To decrypt the data at the platform, the platform will first have to decrypt the single encryption/decryption key by using its private decryption key in step 701. With the decrypted single encryption/decryption key, the platform now has the single encryption/decryption key and the data packet can then be decrypted. By separately encrypting the single encryption/decryption key with the public/private keys, the benefit of using the more secure public/private encryption system to protect the entire data packet is gained while maintaining a lower level of complexity.

Once an application program or object file has been authenticated by the procedures detailed in Figs. 4 or 6 or other similar procedures, it is considered to be secure data. If an application program or object file is not authenticated, it is considered to be insecure.

By having the encryption/decryption keys unique to each computer platform, the invented system can restrict the availability of data to a particular computer platform. Any computer platform that does not have the correct private decryption key for an encrypted data packet cannot properly decrypt it. This ability, in combination with the signature authentication procedures, provides the ability to exert complete control over data transmissions to the computer platform by: 1) ensuring that any data transmission to the computer platform can only be read by that platform, and 2) ensuring that the data transmission has not been tampered with since the author of the data signed it.

The computer platform's private decryption key must be burned into the hardware so that the platform will always be able to decrypt encrypted data packets. In addition, authentication of application programs and object file should be done every time that an application program or object files is placed into the computer platform's memory. By performing this authentication every instance that data is loaded onto the platform, the system ensures that all data loaded on the computer platform will be properly characterized as either secure or insecure.

Although only the manufacturer's public signature is burned into the hardware, the ability to designate application programs and object files as being secure is not restricted to the manufacturer of the computer platform. Any programmer that writes an application program or object file to be used on the computer platform can designate it as being secure data. To accommodate different programmers in designating data as secure, the programmers can send all data to be designated as secure to the manufacturer. After authenticating the data from the programmer, the manufacturer will then digitally sign the data with its secret signature key that corresponds to the public signature key that has been burned into the computer platform's hardware.

Another embodiment entails sending the application programmer's public signature key to the manufacturer. The manufacturer can then digitally sign this public signature key. This signature can then be appended to signatures using the application programmer's signature key. Since it has been signed by the manufacturer, the computer platform will accept the programmer's public signature key as an additional signature key that can be used to authenticate application programs and object files as being secure. These additional public signature keys and the corresponding identities are stored in a list by the O/S. This list will be accessed by the O/S and the identity contained in the credentials will be used to determine the appropriate public signature key.

This procedure of approving another programmer's public signature key is not applicable to O/S verification. It is important to always control the O/S because it ensures that the security features imposed by the O/S cannot be circumvented.

One security feature implemented by the O/S that should not be circumvented is creating firewalls around data in the memory registers 111 to preserve the integrity and privacy of the application programs and the object files. Both an application program's memory and an object files' memory are automatically shielded from all other applications that may be running on the computer platform 101. No special programming by the programmers is needed to enjoy this protection. To breach a firewall, the O/S will seek permission from two places: 1) the application program requesting the breach and 2) the data in memory that is to be accessed.

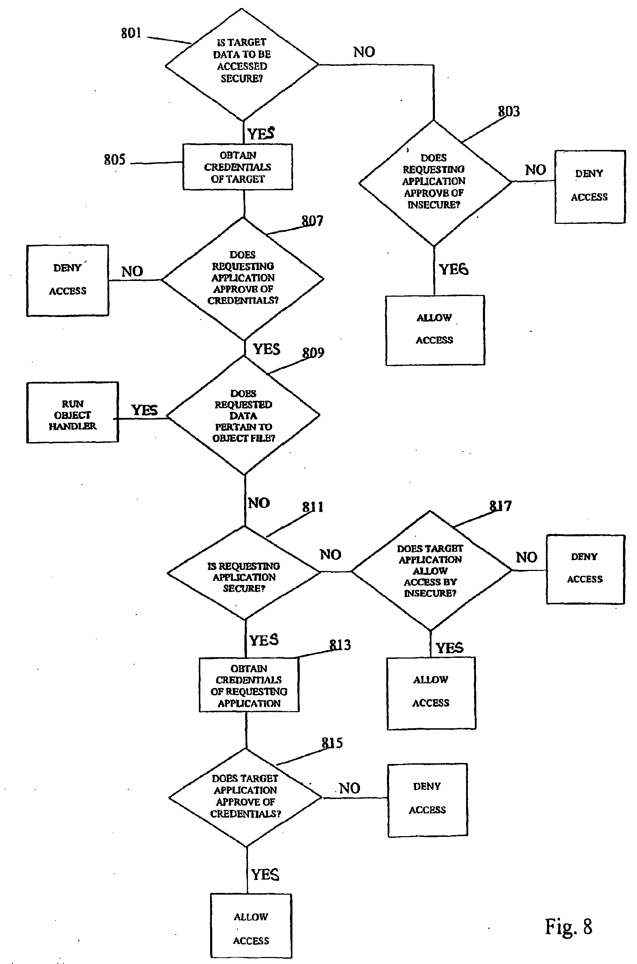

Fig. 8 depicts the process of obtaining the appropriate permission before allowing access to application programs or object files in memory. For the first step 801, the O/S determines if the data in memory to be accessed belongs to a secure object file or application program. If the data in memory is not secure, then the O/S informs the requesting application program that it is not secure. The O/S will permit the requesting application program to gain access to the insecure data if the requesting application has been written to allow access to insecure data as determined in step 803.

If the data in memory pertains to secure data, then the O/S provides the credentials of the secure target data to the requesting application program in step 805 in order for the requesting application program to determine if the credentials are approved in step 807.

The O/S will not automatically provide access to the secure data if the requesting application program approves of the credentials. With secure data, the O/S then determines whether the data pertains to an application program or an object file in step 809.

If the memory belongs to an object file, then the O/S will usually run an object handler associated with the object file. The term "object handler" used herein refers to a program that is associated with object files that determine if access to that object file is permitted. For example, an object handler associated with a particular object file might permit access through the fire wall for an application program which derives from the publisher of the object file. The object handler can use a number of parameters (publisher, expiration date, platform identifications, etc.) as criteria for access. If the object handler determines that permission to access the desired memory is permitted, the O/S will allow access.

Object handlers are usually created by the author of the data packet and are included along with the data packet that will be digitally signed. However, default object handlers can created by the O/S for secure object files that have no object handler in another embodiment of the present invention.

If the target data in memory belongs to an application program, then the O/S must then determine if the target application approves of the requesting application program. The next step 811 is to determine if the requesting application is secure. Depending on the requesting application's secure status, either the credentials of the requesting application is communicated to the target application program in step 813 or the fact that it is insecure is communicated to the target application program. In either case, the target program application must determine if access to its memory is granted as depicted in steps 815 and 817 respectively.

Obtaining permission to breach a firewall must be obtained every new instance in which an application program requests access to data in memory. Once an application program obtains permission to access the memory, the application program does not have to obtain permission again until it terminates its access. Once access is terminated, a successive request for access to data in memory will treated as a new instance and the requisite permission must be obtained.

By rigorously protecting the integrity of application programs and object files in memory, the system minimizes the damage caused by computer malfunctions. Any malfunctioning application program or computer viruses can be blocked from affecting other program applications and object files. The firewall essentially isolates potential adverse effects to application programs and object files.

Firewalls also allow the system to extend the control over data transmissions exerted through data encryption and signature authentication to cover the data while in the computer platform's memory. Once in the computer platform's memory, unauthorized access is blocked by the combination of the firewalls and the approval process through object handlers and application program approvals. Thus, unauthorized access to the data is prevented from the time of the creation of the digital signature through to the transmission of the data to the computer platform and use on the platform.

Unauthorized access to the data can also be prevented when the data is exported out of the computer platform by applying the encryption/decryption process to all data being transmitted out of the computer platform. Every time that any data marked as secure is transferred out of the computer platform, the computer platform encrypts the data with the computer platform's encryption key. By encrypting the data, this prevents anyone who does not have that computer platform's decryption key from improperly accessing the data that has been transferred out of the platform.

A variety of data may be designated as sensitive by the OS, meaning that it is undesirable for other entities to learn the contents of this data. For example, the OS may designate as sensitive data that it receives in encrypted form. The OS may automatically deem portions of the memory used by a secure application to be sensitive. Or it may act on a request, generated by an application or the OS itself, that data be designated as being sensitive.

Normally, sensitive date is kept within the computer platform. However, due to memory limitations or to enable backups, it may be necessary to export sensitive data from the computer platform. In the preferred embodiment of the invention, information that is designated as sensitive by the OS is encrypted when it is transmitted, in its entirety or in part, out of the computer platform, and decrypted when it is reimported into the computer platform. In the preferred embodiment of the invention, the OS performs these encryption and decryption steps automatically. Other modes of operation are possible and may be more suitable for specific contexts. For example, the OS may query the computer platform's user or applications residing on the computer platform before performing the encryption or decryption operations. By controlling access to data that has been transferred out of the platform, the invented system effects control over access to the data in all instances of potential access after the digital signature is created. Besides fraudulently securing permission by accessing the secret and private keys, a person must pass the implemented security measures to gain access to secure data. These security features do not impose restrictive rules upon the application programmer because insecure application programs and object files can still operate on the invented system.

The present invention is not to be considered limited in scope by the preferred embodiments described in the specification. The software for the system by which the method of the invention is executed can be stored on any suitable computer readable medium such as floppy disc, computer hard drive, CD-ROM, Flash ROM, non-volatile ROM and RAM. The medium can be magnetically or optically readable. Additional advantages and modifications, which readily occur to those skilled in the art from consideration and specification and practice of this invention are intended to be within the scope of the following claims.

## Claims

1. A data control system comprising:
a computer platform (101)operable to authenticate an operating system to be loaded on the platform and preventing the operating system from being loaded onto the platform when the operating system is not authenticated;
a memory (111) in which application programs and object files can be stored, the operating system being operable to create a firewall around data in memory pertaining to application programs and object files to control access to the application programs and object files;
an input interface (103) connected with the platform to allow input data to be received by the platform, the operating system being capable of decrypting the input data and of authenticating the input data; **characterised by**
an output interface (105) connected to the platform to allow the platform to transmit output data out of the platform, which output data is encrypted when transmitted; the operating system being operable to allow a requesting application program to access target data within the firewall when both the requesting application program authorises access to the target data and a program associated with the target data authorises access by the requesting application program.

2. A data control system as claimed in claim 1, wherein the platform is operable to authenticate (101) the operating system by verifying a digital signature associated with the operating system.

3. A data control system as claimed in claim 1 or 2, wherein the operating system is operable to decrypt the input data with a private decryption key unique to the platform.

4. A data control system as claimed in claim 3, further comprising a sending station operable to encrypt data with a public encryption key; said public encryption key being directly related to said private decryption key of said computer platform.

5. A data control system as claimed in any one of claims 1 to 4, wherein the operating system is operable to authenticate the input data by verifying a digital signature associated with the input data with a public signature key and input data that is not authenticated by said operating system is classified as insecure data.

6. A data control system as claimed in any of claims 1 to 5, wherein the output interface (105) is operable to encrypt the output data when the output data includes at least a portion of data that has been authenticated by the operating system.

7. A data control system as claimed in claim 5, further comprising a sending station operable to create a digital signature with a secret signature key; the secret signature key being distinctively associated with the sending station.

8. A data control system as claimed in any of claims 1 to 4, wherein the operating system is operable to authenticate the input data by using a hash function.

9. A data control system as claimed in any of claims 1 to 8, wherein the data in memory is operable to give approval for access through an object handler associated with each of the object files when the data in memory pertains to the object files.

10. A data control system as claimed in any of claims 1 to 9, operable to encrypt the output data with a public encryption key unique to the platform.

11. A data control system as claimed in claim 10, operable to decrypt the output data with a private decryption key associated with the public encryption key.

12. A data control system as claimed in any of claims 1 to 11 in which the computer platform (101) includes hardware (103) operable to authenticate the operating system and prevent the operating system being loaded when it is not authenticated.

13. A data control system comprising:
a sending station, including: (a) a plurality of application programs, (b) a plurality of object files, (c) a plurality of handler programs, each associated with a separate one of said object files; and (d) a plurality of secret key encoded signatures, each distinctive to a subset of said application programs and said object files;
a plurality of receiving platforms (101), each having firmware (109) and an operating system, the firmware being operable to authenticate the operating system,
each of the receiving platforms (101) being adapted to receive the application programs, object files, handlers and signatures, and each of the receiving platforms having: (a) a public signature identification key to authenticate the signatures and (b) firewalls associated with the application programs and object files to control access to each of the application programs and object files, one of the handler programs associated with each of the object files being operable to permit access to the associated object files by an appropriate one or more of the application programs; and each of the handler programs being programmable to permit multi-parameter control over access to the associated object files; **characterised by** the operating system being operable to allow a requesting application program to access target data within the firewalls when both the requesting application program authorises access to the target data and a program associated with the target data authorises access by the requesting application program.

14. The data control system of claim 13 wherein: the sending station is operable to encrypt the object files and the application programs with a public key unique to the receiving platform (10 1) being addressed and wherein the receiving platform (101) is operable to decrypt the encrypted object files and application programs with a private key.

15. The data control system of claim 13 or 16, wherein the signature identification is provided through a signature creation algorithm and a secret key at the sending station, and through a signature verification algorithm and a public key at each receiving platform.

16. The system of any of claims 13 to 15 wherein:
the sending station has a plurality of secret key encoded signatures, each signature being distinctive to a separate set of application programs and data texts,
each receiving platform (101) having a plurality of public signature identification keys to correspond to the plurality of secret keys at the sending station.

17. A method for providing a data control system, comprising the steps of:
authenticating an operating system to be loaded on a computer platform (101); the authenticating step to be performed every time an operating system is loaded on the computer platform;
verifying credentials of data transmitted to the computer platform before loading the data into memory of the computer platform;
creating firewalls around data loaded into memory of the computer platform;
decrypting data transmitted to the computer platform with a private decryption key unique to the computer platform; **characterised by**
encrypting data transferred out of the computer platform with a public encryption key unique to the computer platform and associated with the public decryption key and the operating system being operable to allow a requesting application program to access target data within the firewalls when both the requesting application program authorises access to the target data and a program associated with the target data authorises access by the requesting application program.

18. A method as claimed in claim 17, wherein the authenticating step is performed by verifying a digital signature associated with the operating system.

19. A method as claimed in claim 17 or 18, further comprising the step of obtaining permission before allowing an application program to access data loaded into memory.

20. A method as claimed in claim 19 wherein the obtaining step is performed through object handlers.

21. A computer readable medium having computer-executable instructions for performing the method of any of claims 16 to 20.

## Patentansprüche

1. Ein Datensteuerungssystem, aufweisend:
eine Computerplattform (101), die zum Authentifizieren eines auf die Plattform zu ladenden Betriebssystems betreibbar ist und zum Verhindern, dass das Betriebssystem auf die Plattform geladen wird, wenn das Betriebssystem nicht authentifiziert ist;
einen Speicher (111) in welchem Anwendungsprogramme und Objektdateien speicherbar sind, wobei das Betriebssystem zum Erstellen einer Firewall um die zu Anwendungsprogrammen und Objektdateien gehörenden Daten in dem Speicher betreibbar ist, um den Zugriff auf die Anwendungsprogramme und Objektdateien zu steuern;
eine Eingangsschnittstelle (103), welche mit der Plattform verbunden ist, um den Empfang von Eingangsdaten durch die Plattform zu erlauben, wobei das Betriebssystem in der Lage ist, die Eingangsdaten zu entschlüsseln und die Eingangsdaten zu authentifizieren; **gekennzeichnet durch**
eine Ausgabeschnittstelle (105), welche mit der Plattform verbunden ist, um der Plattform ein Übertragen von Ausgangsdaten aus der Plattform zu erlauben, wobei die Ausgangsdaten bei der Übertragung verschlüsselt sind; wobei das Betriebssystem betreibbar ist, um einem anfragenden Programm den Zugriff auf Zieldaten innerhalb der Firewall zu erlauben, wenn sowohl das anfragende Anwendungsprogramm den Zugriff auf die Zieldaten autorisiert und ein den Zieldaten zugeordnetes Programm den Zugriff **durch** das anfragende Anwendungsprogramm autorisiert.

2. Ein Datensteuerungssystem gemäß Anspruch 1, wobei die Plattform betreibbar ist, um das Betriebssystem durch Verifizieren einer digitalen Signatur, die dem Betriebssystem zugeordnet ist, zu authentifizieren (101).

3. Ein Datensteuerungssystem gemäß einem der Ansprüche 1 oder 2, wobei das Betriebssystem betreibbar ist, um die Eingangsdaten mit einem privaten Entschlüsselungsschlüssel, der für die Plattform einzigartig ist, zu entschlüsseln.

4. Ein Datensteuerungssystem gemäß Anspruch 3, ferner mit einer Sendestation, welche betreibbar ist, um Daten mit einem öffentlichen Verschlüsselungsschlüssel zu verschlüsseln, wobei der öffentliche Verschlüsselungsschlüssel unmittelbar mit dem privaten Entschlüsselungsschlüssel der Computerplattform in Beziehung steht.

5. Ein Datensteuerungssystem gemäß einem der Ansprüche 1 bis 4, wobei das Betriebssystem betreibbar ist, um die Eingangsdaten zu authentifizieren, indem eine den Eingangsdaten zugeordnete digitale Signatur mit einem öffentlichen Signaturschlüssel verifiziert wird und wobei Eingangsdaten, welche nicht durch das Betriebssystem authentifiziert sind, als unsichere Daten klassifiziert werden.

6. Ein Datensteuerungssystem gemäß einem der Ansprüche 1 bis 5, wobei die Ausgangsschnittstelle (105) betriebbar ist, um die Ausgangsdaten zu verschlüsseln, wenn die Ausgangsdaten wenigstens einen Teil von Daten enthalten, welche durch das Betriebssystem authentifiziert wurden.

7. Ein Datensteuerungssystem gemäß Anspruch 5, ferner mit einer Sendestation, welche betreibbar ist, um eine digitale Signatur mit einem geheimen Signaturschlüssel zu erzeugen, wobei der geheime Signaturschlüssel unverwechselbar der Sendestation zugeordnet ist.

8. Ein Datensteuerungssystem gemäß einem der Ansprüche 1 bis 4, wobei das Betriebssystem betreibbar ist, um die Eingangsdaten durch Verwendung einer Hash-Funktion zu authentifizieren.

9. Ein Datensteuerungssystem gemäß einem der Ansprüche 1 bis 8, wobei die Daten in dem Speicher betreibbar sind, um einen Zugriff durch einen Objekt-Handler zuzulassen, welcher jeder der Objektdateien zugeordnet ist, wenn die Daten in dem Speicher zu den Objektdateien gehören.

10. Ein Datensteuerungssystem gemäß einem der Ansprüche 1 bis 9, welches betreibbar ist, um die Ausgangsdaten mit einem öffentlichen Verschlüsselungsschlüssel zu verschlüsseln, welcher für die Plattform eindeutig ist.

11. Ein Datensteuerungssystem gemäß Anspruch 10, welches betreibbar ist, um die Ausgangsdaten mit einem privaten Entschlüsselungsschlüssel zu entschlüsseln, welcher dem öffentlichen Verschlüsselungsschlüssel zugeordnet ist.

12. Ein Datensteuerungssystem gemäß einem Ansprüche 1 bis 11, wobei die Computerplattform (101) Hardware (103) enthält, welche betreibbar ist, um das Betriebssystem zu authentifizieren und zu verhindern, dass das Betriebssystem geladen wird, wenn es nicht authentifiziert ist.

13. Ein Datensteuerungssystem, aufweisend:
eine Sendestation, enthaltend: (a) eine Mehrzahl von Anwendungsprogrammen, (b) eine Mehrzahl von Objektdateien, (c) eine Mehrzahl von Handler-Programmen, jeweils einer einzelnen der Objektdateien zugeordnet, und (d) einer Mehrzahl von geheimschlüssel-verschlüsselten Signaturen, jeweils eindeutig für eine Untermenge der Anwendungsprogramme und der Objektdateien;
eine Mehrzahl von Empfangsplattformen (101), jeweils mit Firmware (109) und einem Betriebssystem, wobei die Firmware betreibbar ist, um das Betriebssystem zu authentifizieren,
wobei jede der Empfangsplattformen (101) zum Empfangen der Anwendungsprogramme, Objektdateien, Handler und Signaturen angepaßt ist und jede der Empfangsplattformen aufweist: (a) einen öffentlichen Signatur-Identifikationsschlüssel zum Authentifizieren der Signaturen und (b) Firewalls, die den Anwendungsprogrammen und Objektdateien zur Steuerung des Zugriffs auf jedes der Anwendungsprogramme und jede der Objektdateien zugeordnet ist, wobei eines der Handler-Programme, die jedem der Objektdateien zugeordnet sind, betreibbar ist, um Zugriff auf die zugeordneten Objektdateien durch ein oder mehrere geeignete Anwendungsprogramme zu erlauben; und wobei jedes der Handler-Programme programmierbar ist, um eine Multi-Parametersteuerung über den Zugriff auf die zugeordneten Objektdateien zu erlauben; **dadurch gekennzeichnet,**
**dass** das Betriebssystem betreibbar ist, um einem anfragenden Programm den Zugriff auf Zieldaten innerhalb der Firewalls zu erlauben, wenn sowohl das anfragende Anwendungsprogramm den Zugriff auf die Zieldaten autorisiert und ein den Zieldaten zugeordnetes Programm den Zugriff durch das anfragende Anwendungsprogramm autorisiert.

14. Das Datensteuerungssystem gemäß Anspruch 13, wobei:
die Sendestation betreibbar ist, um die Objektdateien und die Anwendungsprogramme mit einem öffentlichen Schlüssel, der für die adressierte Empfangsplattform (101) eindeutig ist, zu verschlüsseln und wobei die empfangende Plattform (101) betreibbar ist, um die verschlüsselten Objektdateien und Anwendungsprogramme mit einem privaten Schlüssel zu entschlüsseln.

15. Das Datensteuerungssystem gemäß Anspruch 13 oder 16, wobei die Signaturidentifikation durch einen Signatur-Erzeugungsalgorithmus bereitgestellt wird und einen geheimen Schlüssel an der sendenden Station, und durch einen Signatur-Verifizierungsalgorithmus und einen öffentlichen Schlüssel an jeder empfangenden Plattform.

16. Das System gemäß einem der Ansprüche 13 bis 15, wobei:
die Sendestation eine Mehrzahl von geheimschlüssel-verschlüsselten Signaturen aufweist, wobei jede Signatur für einen einzelnen Satz von Anwendungsprogrammen und Datentexten eindeutig ist,
jede empfangende Plattform (101) eine Mehrzahl von öffentlichen Signatur-Identifikationsschlüsseln aufweist, die der Mehrzahl von geheimen Schlüsseln an der sendenden Station zugeordnet sind.

17. Ein Verfahren zum Bereitstellen eines Datensteuerungssystems, aufweisend die Schritte:
Authentifizieren eines auf einer Computerplattform (101) zu ladenden Betriebssystems; wobei der Authentifizierungsschritt jedes Mal ausgeführt wird, wenn ein Betriebssystem auf die Computerplattform geladen wird;
Verifizieren von Referenzen von Daten, die zu der Computerplattform übermittelt werden, bevor die Daten in den Speicher der Computerplattform geladen werden;
Erzeugen von Firewalls um Daten, die in den Speicher der Computerplattform geladen werden;
Entschlüsseln von auf die Computerplattform übertragenen Daten mit einem privaten Entschlüsselungsschlüssel, der für die Computerplattform eindeutig ist; **gekennzeichnet durch**
Verschlüsseln von Daten, die aus der Computerplattform übertragen werden, mit einem öffentlichen Verschlüsselungsschlüssel, der für die Computerplattform eindeutig ist und einem öffentlichen Entschlüsselungsschlüssel zugeordnet ist und wobei das Betriebssystem betreibbar ist, um einem anfragenden Anwendungsprogramm den Zugriff auf Zieldaten innerhalb der Firewalls zu erlauben, wenn sowohl das anfragende Anwendungsprogramm den Zugriff auf die Zieldaten autorisiert und ein den Zieldaten zugeordnetes Programm den Zugriff **durch** das anfragende Anwendungsprogramm autorisiert.

18. Ein Verfahren gemäß Anspruch 17, wobei der Authentifizierungsschritt ausgeführt wird, indem eine digitale Signatur verifiziert wird, welche dem Betriebssystem zugeordnet ist.

19. Ein Verfahren gemäß Anspruch 17 oder 18, ferner mit dem Schritt des Erhaltens einer Erlaubnis, bevor es einem Anwendungsprogramm erlaubt wird, auf in den Speicher geladene Daten zuzugreifen.

20. Ein Verfahren gemäß Anspruch 19, wobei der Schritt des Erhaltens durch Objekt-Handler ausgeführt wird.

21. Ein computerlesbares Medium mit computerausführbaren Anweisungen zum Ausführen des Verfahrens gemäß einem der Ansprüche 16 bis 20.

## Revendications

1. Système de contrôle de données, comprenant :
une plate-forme informatique (101) ayant pour fonction d'authentifier un système d'exploitation devant être chargé sur la plate-forme et d'empêcher le chargement du système d'exploitation sur la plate-forme lorsque le système d'exploitation n'est pas authentifié;
une mémoire (111) dans laquelle des programmes d'applications et des fichiers objets peuvent être stockés, le système d'exploitation ayant pour fonction de créer un pare-feu autour de données en mémoire relatives aux programmes d'application et fichiers objets afin de contrôler l'accès aux programmes d'applications et fichiers objets;
une interface d'entrée (103) connectée à la plate-forme pour permettre la réception de données d'entrée par la plate-forme, le système d'exploitation étant capable de décrypter les données d'entrée et d'authentifier les données d'entrée; **caractérisé par** :
une interface de sortie (105) connectée à la plate-forme pour permettre à la plate-forme de transmettre des données de sortie provenant de la plate-forme, lesquelles données de sortie sont cryptées lorsqu'elles sont transmises; le système d'exploitation ayant pour fonction de permettre à un programme d'application demandeur d'accéder à des données cibles derrière le pare-feu lorsque, d'une part, le programme d'application demandeur autorise l'accès aux données cibles et que, d'autre part, un programme associé aux données cibles autorise l'accès par le programme d'application demandeur.

2. Système de contrôle de données selon la revendication 1, **caractérisé en ce que** la plate-forme a pour fonction d'authentifier (101) le système d'exploitation en vérifiant une signature numérique associée au système d'exploitation.

3. Système de contrôle de données selon la revendication 1 ou 2, **caractérisé en ce que** le système d'exploitation a pour fonction de décrypter les données d'entrée avec une clé de décryptage privée propre à la plate-forme.

4. Système de contrôle de données selon la revendication 3, comprenant en outre une station émettrice ayant pour fonction de crypter des données avec une clé de cryptage publique; ladite clé de cryptage publique étant directement liée à ladite clé de décryptage privée de ladite plate-forme informatique.

5. Système de contrôle de données selon l'une quelconque des revendications 1 à 4, **caractérisé en ce que** le système d'exploitation a pour fonction d'authentifier les données d'entrée en vérifiant une signature numérique associée aux données d'entrée avec une clé de signature publique et **en ce que** les données d'entrée qui ne sont pas authentifiées par ledit système d'exploitation sont classées comme étant des données non sécurisées.

6. Système de contrôle de données selon l'une quelconque des revendications 1 à 5, **caractérisé en ce que** l'interface de sortie (105) a pour fonction de crypter les données de sortie lorsque les données de sortie comprennent au moins une partie de données ayant été authentifiées par le système d'exploitation.

7. Système de contrôle de données selon la revendication 5, comprenant en outre une station émettrice ayant pour fonction de créer une signature numérique avec une clé de signature secrète; la clé de signature secrète étant associée de façon distinctive à la station émettrice.

8. Système de contrôle de données selon l'une quelconque des revendications 1 à 4, **caractérisé en ce que** le système d'exploitation a pour fonction d'authentifier les données d'entrée en utilisant une fonction de hachage.

9. Système de contrôle de données selon l'une quelconque des revendications 1 à 8, dans lequel les données en mémoire ont pour fonction de fournir une approbation d'accès par l'intermédiaire d'un gestionnaire d'objets associé à chacun des fichiers objets lorsque les données en mémoire concernent les fichiers objets.

10. Système de contrôle de données selon l'une quelconque des revendications 1 à 9, ayant pour fonction de crypter les données de sortie avec une clé de cryptage publique propre à la plate-forme.

11. Système de contrôle de données selon la revendication 10, ayant pour fonction de décrypter les données de sortie avec une clé de décryptage privée associée à la clé de cryptage publique.

12. Système de contrôle de données selon l'une quelconque des revendications 1 à 11, dans lequel la plate-forme informatique (101) comprend un matériel (103) ayant pour fonction d'authentifier le système d'exploitation et d'empêcher le chargement du système d'exploitation lorsque celui-ci n'est pas authentifié.

13. Système de contrôle de données, comprenant :
une station émettrice, comprenant : (a) une pluralité de programmes d'application, (b) une pluralité de fichiers objets, (c) une pluralité de programmes gestionnaires, chacun associé à l'un, séparé, desdits fichiers objets, et (d) une pluralité de signatures codées par clé secrète, chacune distinguant un sous-ensemble desdits programmes d'application et desdits fichiers objets;
une pluralité de plates-formes réceptrices (101), ayant chacune un microcode (109) et un système d'exploitation, le microcode ayant pour fonction d'authentifier le système d'exploitation,
chacune des plates-formes réceptrices (101) étant conçue pour recevoir les programmes d'applications, les fichiers objets, les gestionnaires et les signatures, et chacune des plates-formes réceptrices ayant : (a) une clé d'identification de signature publique pour authentifier les signatures et (b) des pare-feu associés aux programmes d'application et fichiers objets pour contrôler l'accès à chacun des programmes d'applications et fichiers objets, l'un des programmes gestionnaires associés à chacun des fichiers objets ayant pour fonction de permettre l'accès aux fichiers objets associés par un ou plusieurs, approprié(s), des programmes d'application; et chacun des programmes gestionnaires étant programmable pour permettre un contrôle par paramètres multiples de l'accès aux fichiers objets associés; **caractérisé par le fait que** le système d'exploitation a pour fonction de permettre à un programme d'application demandeur d'accéder à des données cibles derrière les pare-feu lorsque, d'une part, le programme d'application demandeur autorise l'accès aux données cibles et que, d'autre part, un programme associé aux données cibles autorise l'accès par le programme d'application demandeur.

14. Système de contrôle de données selon la revendication 13, **caractérisé en ce que** : la station émettrice a pour fonction de crypter les fichiers objets et les programmes d'application avec une clé publique propre à la plate-forme réceptrice (101) adressée et **en ce que** la plate-forme réceptrice (101) a pour fonction de décrypter les fichiers objets cryptés et programmes d'applications avec une clé privée.

15. Système de contrôle de données selon la revendication 13 ou 16, **caractérisé en ce que** l'identification de signature est fournie par un algorithme de création de signature et une clé secrète sur la station émettrice, et par un algorithme de vérification de signature et une clé publique sur chaque plate-forme réceptrice.

16. Système selon l'une quelconque des revendications 13 à 15, **caractérisé en ce que** :
la station émettrice a une pluralité de signatures codées par clé secrète, chaque signature étant distinctive d'un ensemble séparé de programmes d'application et de textes de données,
chaque plate-forme réceptrice (101) ayant une pluralité de clés d'identification par signature publique devant correspondre à la pluralité de clés secrètes sur la station émettrice.

17. Procédé pour fournir un système de contrôle de données, comprenant les étapes suivantes :
authentification d'un système d'exploitation devant être chargé sur une plate-forme informatique (101); l'étape d'authentification devant être effectuée chaque fois qu'un système d'exploitation est chargé sur la plate-forme informatique;
vérification des justificatifs de données transmis à la plate-forme informatique avant de charger les données dans la mémoire de la plate-forme informatique;
création de pare-feu autour des données chargées dans la mémoire de la plate-forme informatique;
décryptage de données transmises à la plate-forme informatique avec une clé de décryptage privée propre à la plate-forme informatique; **caractérisé par**
le cryptage de données transférées en sortie de la plate-forme informatique avec une clé de cryptage publique propre à la plate-forme informatique et associée à la clé de cryptage publique, le système d'exploitation ayant pour fonction de permettre à un programme d'application demandeur d'accéder à des données cibles derrière les pare-feu lorsque, d'une part, le programme d'application demandeur autorise l'accès aux données cibles et que, d'autre part, un programme associé aux données cibles autorise l'accès par le programme d'application demandeur.

18. Procédé selon la revendication 17, **caractérisé en ce que** l'étape d'authentification est effectuée en vérifiant une signature numérique associée au système d'exploitation.

19. Procédé selon la revendication 17 ou 18, comprenant en outre l'étape d'obtention d'une permission avant de permettre à un programme d'application d'accéder à des données chargées dans la mémoire.

20. Procédé selon la revendication 19, dans lequel l'étape d'obtention est effectuée par l'intermédiaire de gestionnaires d'objets.

21. Support lisible par ordinateur comportant des instructions exécutables par ordinateur pour mettre en oeuvre le procédé selon l'une quelconque des revendications 16 à 20.
